# FASCICULE DE BREVET EUROPEEN

(11) **EP 0 695 727 B1**
(45) Date de publication et mention de la délivrance du brevet: **28.11.2001**
(21) Numéro de dépôt: 95401786.9
(22) Date de dépôt: 27.07.1995
(51) Int. Cl.: C03C 17/00, C03C 17/04, B44D 2/00, B44F 9/04

(54) **Procédé d'obtention d'un panneau décoratif à partir d'un substrat transparent**
Verfahren zur Herstellung einer Dekorscheibe ausgehend von einem transparenten Substrat
Process for containing a decorative panel starting from a transparent substrate

(30) Priorité: 03.08.1994 FR 9409621
(43) Date de publication de la demande: 07.02.1996
(73) Titulaire: SAINT-GOBAIN GLASS FRANCE, 92400 Courbevoie (FR)
(72) Inventeur: Maris, Olivier, Saint-Gobain Nederland B.V., NL-4551 CM Sas van Gent (NL); Beaufays, Jean-Pierre, B-5190 Jemeppe sur Sambre (BE); Bonnet, Jean-Louis, B-6224 Wanfercee-Baulet (BE)
(74) Mandataire: Renous Chan, Véronique

(56) Documents cités:
- FR-A- 2 310 889
- FR-A- 2 626 502
- FR-A- 2 670 158
- GB-A- 2 116 879
- NL-A- 9 201 878
- PATENT ABSTRACTS OF JAPAN vol. 014 no. 157 (M-0955) ,27 Mars 1990 & JP-A-02 018100 (INAX CORP) 22 Janvier 1990,
- PATENT ABSTRACTS OF JAPAN vol. 016 no. 081 (C-0915) ,27 Février 1992 & JP-A-03 271177 (TOTO LTD) 3 Décembre 1991,
- PATENT ABSTRACTS OF JAPAN vol. 015 no. 440 (C-0883) ,11 Novembre 1991 & JP-A-03 186381 (MATSUSHITA ELECTRIC WORKS LTD) 14 Août 1991,
- DATABASE WPI Section Ch, Week 9116 Derwent Publications Ltd., London, GB; Class A82, AN 91-114364 & JP-A-03 056 175 (DAINIPPON PRINTING KK) , 11 Mars 1991
- The Handbook of Glass Manufacture, 3ème Ed., Vol.2, Ashlee Publishing Co., New York, pages 837, 845

## Description

L'invention concerne un procédé d'obtention de panneaux décoratifs à partir de substrats transparents du type substrats de verre, panneaux en particulier utilisés dans le bâtiment, notamment en tant que revêtements muraux intérieurs ou extérieurs, parements de façade, éléments de cloison, ...

Pour réaliser ce type de panneau décoratif pour revêtement, il est connu d'utiliser des plaques de pierre ornementale, par exemple de marbre ou de granit, soit collées directement sur le mur porteur à l'aide d'une colle à base de ciment, soit, en variante, montées sur une armature. Choisir de la pierre véritable, présente cependant des inconvénients. D'abord, il s'agit d'un choix coûteux, d'autant plus qu'il est nécessaire que les plaques de pierre présentent une épaisseur assez significative pour en permettre la manipulation sans risque. Ensuite, la pierre est un matériau qui présente un rugosité et/ou une porosité de surface naturelles qui posent des problèmes de nettoyage face à des salissures ou graffitis en tous genres et des risques de casse par temps de gel. En dernier lieu, il est difficile de s'écarter des formes du type plaque plane pour obtenir des formes un peu incurvées par exemple.

Il a été alors proposé de fabriquer des panneaux décoratifs constitués de plaques de verre revêtues de décors imitant la pierre, décors déposés par des techniques d'impression d'encre, tout particulièrement par des techniques de sérigraphie.

On simplifie ainsi grandement les opérations de nettoyage, et on réduit considérablement les coûts avec un support du type verre, standard, et des techniques d'impression rodées permettant des fabrications en grande série à cadence assez élevée. En outre, le verre est une matière déformable, bombable. Cependant, cette solution n'est pas entièrement satisfaisante sur le plan esthétique : en effet, la technique même de la sérigraphie laisse visible dans le décor sur verre une trame révélatrice de l'original et nécessaire pour obtenir des teintes dégradées, ce qui lui donne un peu l'aspect d'un tissu et souligne son caractère artificiel. En outre l'assemblage de tels panneaux pour former des surfaces importantes peut engendrer une certaine lassitude lors de l'observation, dans la mesure où l'oeil est attiré par le côté répétitif des motifs des panneaux juxtaposés, ce qui est imposé par l'impression par sérigraphie accentuant encore ce caractère artificiel.

Le but de l'invention est alors de remédier à ces inconvénients en proposant un nouveau mode d'obtention de panneaux décoratifs à base de substrats transparents du type verre qui soit simple à mettre en oeuvre et qui permette d'avoir des décors plus esthétiques, et notamment plus variés et moins répétitifs.

L'invention a pour objet un procédé d'obtention d'un panneau décoratif à l'aspect granité ou tacheté à partir d'un substrat transparent en verre. Ce procédé consiste à projeter sur une des faces du substrat des nuages de gouttelettes d'émail coloré, d'au moins deux couleurs différentes, chaque nuage de gouttelettes recouvrant partiellement ladite face en laissant sur celle-ci des taches réparties de manière aléatoire et fonction du point d'impact desdites gouttelettes.

L'invention se caractérise en outre par le fait qu'elle fixe lesdites taches définitivement sur le substrat par vitrification à haute température opérée pendant le traitement thermique du substrat porteur en verre à au moins 600°C, qui est un durcissement, une trempe, un recuit ou un bombage, l'ensemble des dépôts effectués sur le substrat, une fois séchés, ne dépassant pas 500 µm d'épaisseur, chaque projection déposant sur le substrat 20 à 100 g/m² d'émail, sous forme de taches qui, une fois séchées, ont une épaisseur comprise entre 15 et 150 µm. Après avoir effectué les projections sur une face du substrat, on recouvre celle-ci d'une couche continue opacifiante d'émail par une projection déposant 250 à 350 g/m² d'émail.

Dans la suite du présent texte, la laque est mentionnée à titre comparatif.

L'intérêt majeur de la technique de dépôt par projection ou pulvérisation par rapport aux techniques de dépôt par impression est que l'on supprime tout caractère répétitif, toute notion de « motif » dans le décor. Il n'y a en outre plus trace de tramage dans celui-ci. C'est cette absence de monotonie qui est le point fort de l'invention.

D'une part l'invention, par des réglages appropriés des dispositifs de projection choisis, permet d'ajuster et de contrôler en moyenne, statistiquement, la répartition des taches issues des gouttelettes frappant le substrat, notamment leur taille moyenne, voire leur forme, leur densité de recouvrement du substrat, ou autres caractéristiques. C'est bien sûr important pour assure la production de panneaux en série présentant une qualité et un aspect global constants.

Mais d'autre part, elle permet également de conserver à cette répartition de taches un certain caractère aléatoire, les taches présentant localement des tailles variables, des formes variables dues notamment aux superpositions éventuelles de taches de même couleur ou de couleurs différentes. On obtient ainsi un décor granité, moucheté multicolore très agréable à l'oeil.

On peut noter qu'il est préférable d'ajuster le mode de projection et/ou la viscosité de l'émail ou de la laque de manière à ce que les gouttelettes ne « rebondissent » pas à la surface du substrat, mais se transforment en taches au niveau de leurs points d'impact mêmes sur le substrat. On obtient ainsi plus facilement des taches ayant à la fois des contours très nets et précis et des formes plus ou moins arrondies.

L'émail et la laque sont deux types de matériau se prêtant bien à un dépôt par projection. Dans le cadre de l'invention, ces termes désignent aussi bien les compositions à projeter/pulvériser que les dépôts une fois fixés définitivement sur le substrat.

On rappelle en effet que l'émail utilisé pour la projection est, de manière connue, majoritairement de nature inorganique car constitué essentiellement d'une matrice vitreuse appelée aussi fritte de verre contenant, pour l'invention, différents pigments de coloration à base d'oxyde(s), et véhiculée par un médium comportant généralement un liant permettant l'adhésion de l'émail avec le verre au moment du dépôt et un solvant aqueux ou organique permettant la mise à viscosité désirée. On en trouve un exemple dans le brevet EP-0 174 893. Pour se fixer sur le substrat, l'émail doit ensuite être séché, par exemple par chauffage par rayonnement infrarouge, puis vitrifié. Séchage et vitrification peuvent cependant être conduits simultanément. Le médium de l'émail peut également être essentiellement organique et apte à polymériser. Au lieu d'un séchage à proprement dit, on effectue alors une polymérisation du médium, notamment par chauffage par rayonnement ultraviolet.

Dans le contexte de l'invention, le terme générique de « laque » mentionné précédemment recouvre en fait toutes les compositions fluides (et dépôts obtenus à partir de celles-ci) qui sont de nature essentiellement organique et que l'on désigne aussi usuellement sous le terme d'encre, de vernis ou de peinture. On peut notamment utiliser ou adapter toutes les « laques » employées usuellement pour le marquage ou la décoration de substrats divers allant du métal au papier, par exemple par des techniques d'impression du type sérigraphie, technique off-set ou flexographie. La « laque » dans le sens de l'invention est ainsi usuellement constituée d'un polymère ou mélange de polymères durcissables ou réticulables du type résine époxy, polyester, polyuréthane, polyvinyl, polychlorure de vinyl, polyéthylène, polyacrylique... Elle contient aussi des « pigments » et/ou « colorants » afin d'avoir la teinte voulue. Un « pigment » se présente plutôt sous la forme de structure cristalline multi-moléculaire et se disperse sous forme de particules dans la laque, il peut être de nature organique ou minérale. Un « colorant » a le même effet, mais se solubilise entièrement et est plutôt de nature organique. En dernier lieu, la laque contient un solvant et/ou un diluant généralement organique(s), mais qui peuvent aussi être aqueux, la quantité de diluant permettant de maîtriser la viscosité de la laque. Certaines laques peuvent également ne pas contenir de solvant, on ajuste leur viscosité à l'aide d'un diluant qui peut polymériser. Au lieu d'effectuer le « séchage » par évaporation du solvant et/ou du diluant, on doit alors effectuer la polymérisation du diluant, usuellement par rayonnement ultraviolet. La laque peut en outre contenir d'autres constituants mineurs du type surfactant, plastifiant, promoteur d'adhérence, cire ou autres additifs. On peut se reporter, avantageusement, pour plus de détails concernant les compositions de laque, au livre intitulé «The printing ink manual » réédité par R.H. LEACH et R.J. PIERCE en 1992 dans la collection « Blueprint », et tout particulièrement à son chapitre 4 dont l'auteur est M. CLAYTON.

Pour se fixer sur le substrat, la laque doit ensuite être séchée et durcie/réticulée dans le cas où elle contient solvant et/ou diluant à évaporer. Comme pour l'émail, on peut réaliser simultanément séchage et durcissement/réticulation. Si la laque ne contient pas de solvant, mais un diluant polymérisable, alors polymérisation du diluant et durcissement/réticulation de la résine sont conduits simultanément.

Avantageusement, selon l'invention, on recouvre le substrat de son décor par projections successives de nuages de gouttelettes, chaque nuage de gouttelettes étant monochromatique. On peut ainsi mieux ajuster la superposition des couleurs, et décider s'il y aura ou pas une teinte dominante par le choix de la densité et de la taille moyenne des taches de chaque couleur.

Après avoir effectué les projections sur une des faces du substrat, on peut ensuite recouvrir cette face d'une couche continue opacifiante d'émail ou de laque par une technique de projection notamment telle que le « pistolettage » ou la technique dite « rideau ». Le pistolettage consiste à utiliser des pistolets se déplaçant en va-et-vient transversalement à l'axe de défilement du substrat à recouvrir, la technique dite « rideau » consistant à placer une buse de distribution au-dessus du substrat transversalement à son axe de défilement, la buse délivrant en continu un rideau d'émail ou de laque sur la surface du substrat à recouvrir.

L'intérêt d'une couche opacifiante est que l'on peut poser le substrat décoré contre un mur ou une armature porteuse par sa face munie du décor, la couche opacifiante dissimulant le mur ou l'armature et protégeant le mouchetis des dégradations. Cette couche opacifiante participe alors activement au décor en offrant aux taches multicolores un fond coloré uniforme. Le spectateur voit le décor à travers la face du substrat transparente non recouverte qui est exposée. Il va de soi que le substrat peut aussi être dépourvu de couche opacifiante, afin de permettre un certain degré de visibilité en transmission dépendant du taux de recouvrement global des taches sur le substrat, ce qui peut être intéressant si on l'utilise pour faire des cloisons intérieures ou des portes de bureau.

A noter que l'invention peut également s'appliquer à la décoration de substrats opaques, du type plaques métalliques, pour faire des allèges notamment. Dans ce cas, il est nécessaire d'inverser la séquence des dépôts, et de commencer par le dépôt de la couche opacifiante pour finir par la projection de nuage de gouttelettes. Si l'on ne dépose pas de couche opacifiante, c'est la couleur du substrat même qui remplira son rôle.

Une fois tous les dépôts de taches, et éventuellement de couche opacifiante, effectués, il est utile de sécher l'émail ou la laque sur le substrat. On peut aussi choisir d'effectuer le séchage, au moins partiel, après au moins un des dépôts par pulvérisation. Si tous les dépôts sont faits sur ligne, consécutivement, et que l'on sèche complètement l'émail ou la laque après chaque dépôt, les taches de couleurs différentes se superposent éventuellement sans aucun mélange de couleurs. Il en va autrement si, au contraire, on ne sèche qu'à la fin, les taches encore humides, lorsqu'elles se superposent, ayant alors tendance à se fondre les unes dans les autres et à prendre une couleur intermédiaire, d'où un aspect plus ou moins dégradé de couleurs qui peut être assez esthétique.

Les conditions dans lesquelles on opère le séchage sont les conditions usuelles connues. Ainsi, s'il s'agit d'émail, on peut faire le séchage par un traitement par rayonnement infrarouge ou micro-onde et/ou soufflage d'air chaud afin d'évaporer le médium de l'émail s'il est essentiellement aqueux. Le séchage peut aussi être réalisé par traitement par rayonnement ultraviolet afin de polymériser le médium ultérieurement calciné lors de la vitrification, si ce médium est de nature organique et polymérisable. On se rapportera pour plus de détails à l'enseignement des demandes de brevet FR-2 672 044, EP-0 174 174 893 et EP-0 074 314.

Le séchage de la laque peut être opéré de la même manière, notamment par traitement thermique du type rayonnement infrarouge ou soufflage d'air chaud afin d'évaporer le solvant. Si la laque est dépourvue de solvant, mais contient un diluant polymérisable, comme déjà mentionné, on le polymérise usuellement sous ultraviolet, en même temps que la réticulation de la résine s'opère. Par souci de simplicité de terminologie, on donne donc au terme de « séchage » selon l'invention la signification d'un traitement qui conduit à rendre la laque ou l'émail moins liquide, soit par un phénomène d'évaporation de solvant/diluant, soit par un phénomène de polymérisation de ces derniers.

Une fois les dépôts effectués, il faut ensuite fixer définitivement le décor sur le substrat, ce qui est fait par vitrification à haute température après séchage dans le cas de l'émail, et par un durcissement ou une réticulation par traitement thermique dans le cas de la laque (quand cela n'a pas déjà été fait dans le cas où on utilise un diluant polymérisable). Pour la laque, comme pour l'émail, comme souligné précédemment, séchage et durcissement/réticulation peuvent être effectués consécutivement ou simultanément.

S'il s'agit d'émail, sa vitrification après séchage peut être effectuée pendant le traitement thermique du substrat transparent, lorsqu'il s'agit d'un substrat en verre, traitement thermique qui peut être un durcissement, une trempe, un recuit ou un bombage impliquant un chauffage à au moins 600 ou 650°C.

Le mode de réalisation le plus simple de l'invention consiste à effectuer les projections par une technique utilisant des dispositifs de projection sous forme de pistolet, les pistolets générant les nuages étant placés face au substrat et animés d'un mouvement de va-et-vient transversal par rapport à l'axe de défilement dudit substrat. Peuvent aussi être avantageusement utilisés des dispositifs de projection du type brosses tournantes, par exemple montées en rotation au-dessus du substrat autour d'axes transversaux par rapport à son axe de défilement.

On peut alors choisir le taux de recouvrement du substrat après chaque projection en alimentant pistolet ou brosses tournantes en émail ou en laque avec un débit adéquat. La taille moyenne des taches peut être de même choisie par des réglages de fonctionnement des dispositifs de projection, notamment en sélectionnant de manière appropriée la pression des gaz d'entraînement de l'émail ou de la laque des pistolets ou la vitesse de rotation des brosses tournantes. Il va de soi, cependant, que l'invention n'est pas limitée à ces deux types de dispositifs de projection, et que tout autre dispositif mécanique ou physique est utilisable s'il permet une projection adéquate sous forme de gouttelettes de fluide, notamment des dispositifs animés de mouvement de rotation, translation, vibration du type ultrasons, etc...

Chaque projection de nuage de gouttelettes dépose de préférence sur le substrat des taches d'épaisseur moyenne (mesurée après séchage), de préférence ne dépassant pas 150 micromètres, notamment comprise entre 15 et 50 micromètres. Une fois toutes les projections faites (de préférence au nombre de 2 à 4) et la couche optionnelle opacifiante éventuellement déposée, on préfère que l'ensemble des dépôts n'ait pas une épaisseur « séchée » maximale dépassant localement 500 micromètres, et ait notamment une épaisseur maximale comprise entre 50 et 150 micromètres. Cela est particulièrement souhaitable dans le cas où il s'agit d'émail que l'on vitrifie par trempe du substrat en verre, des surépaisseurs localisées trop importantes pouvant gêner le processus de trempe du substrat ou même risquer de détériorer le décor.

On peut également évaluer la quantité et la répartition des gouttelettes sur le substrat par le poids d'émail ou de laque humide (c'est-à-dire avant évaporation ou polymérisation du médium ou du solvant) déposé par unité de surface dudit substrat. Ainsi, chaque projection de nuage de gouttelettes dépose de préférence entre 5 et 100 g/m² de matière, et la projection de l'éventuelle couche opacifiante de préférence de 10 à 500 g/m² de matière. Notamment lorsqu'il s'agit d'émail, chaque nuage de gouttelettes dépose avantageusement de 20 à 48 g/m², en moyenne 32 g/m², et la projection de la couche opacifiante dépose de 250 à 350 g/m², en moyenne 280 g/m².

Par ailleurs, chaque projection permet de préférence de déposer des taches de « diamètre moyen» compris entre 0,1 et 10 mm, de préférence entre 0,5 et 5 mm, notamment de 1 à 2 mm. Les taches n'étant pas nécessairement circulaires, le « diamètre moyen » selon l'invention se définit par le diamètre qu'aurait une goutte circulaire de taille moyenne ayant la même surface. Il ne s'agit naturellement que d'une moyenne, les diamètres présentant une dispersion suffisante autour de ces valeurs moyennes pour ne pas créer d'aspect moucheté trop uniforme.

Pour approcher au mieux l'aspect d'un granit, il est préférable que la densité des taches sur le substrat, une fois l'ensemble des projections fait, soit de 5 à 2000 gouttes par cm², de préférence d'environ 10 à 200 gouttes par cm², notamment environ 100 gouttes de toutes tailles dont 10 à 15 de taille moyenne par cm².

L'invention a aussi pour objet les panneaux décoratifs obtenus par le procédé précédemment décrit, notamment ceux comportant un substrat de verre qui peut être durci, trempé, recuit ou bombé, et qui est recouvert sur une de ses faces de taches d'émail ou de laque d'au moins une couleur, de préférence présentant des couleurs différentes, les couleurs étant dans ce cas éventuellement partiellement fondues les unes dans les autres dans les zones de superposition de taches de couleurs différentes, taches elles-mêmes couvertes par une couche continue opacifiante d'émail d'une couleur encore différente des précédentes.

Ces panneaux décoratifs sont avantageusement utilisés en tant que revêtements muraux, cloisons intérieures, parements de façade, dessus de table, portes, étagères, ...

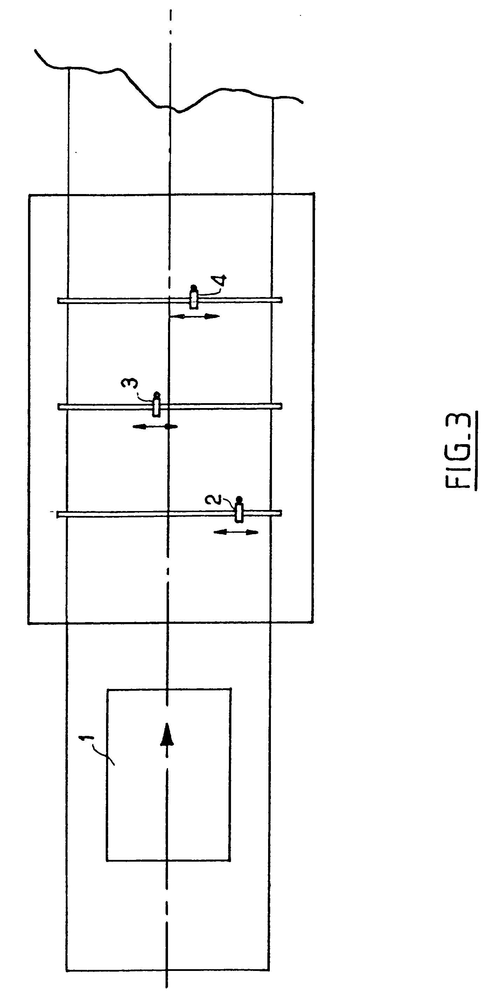

D'autres détails et caractéristiques avantageuses de l'invention ressortent de la description ci-après d'un exemple non limitatif, à l'aide des figures 1 et 2 reproduisant la photo de panneaux décoratifs conformes à l'invention et de la figure 3 représentant de manière schématique l'installation de dépôt du décor, figure à laquelle on se réfère tout d'abord.

Les substrats 1 pour faire le panneau sont ici des plaques de grandes dimensions en verre silico-sodo-calcique clair de 4 mm d'épaisseur environ.

Les pistolets de pulvérisation 2, 3, 4 utilisés sont ici au nombre de trois. Ce sont des pistolets du type de ceux utilisés dans le domaine de l'émaillage ou de la peinture. Il faut en adapter les réglages et le fonctionnement afin qu'ils puissent, pour les deux premiers, déposer des nuages de gouttelettes discontinues (pour créer le mouchetis) et, pour le troisième un voile continu (pour créer la couche opacifiante). On peut jouer sur la densité de taches et le taux de recouvrement desdites taches en réglant le débit de distribution de chacun des deux premiers pistolets de manière appropriée. Concernant la taille moyenne des taches, on peut jouer à la fois sur la pression d'air d'entraînement de l'émail pulvérisé et sur la pression des jets d'air périphériques : l'émail distribué par un orifice du pistolet est en effet pulvérisé sous pression sous forme d'un jet conique et accéléré à l'aide de jets d'air autour de l'orifice. Plus la pression d'air d'entraînement et/ou la pression des jets d'air périphériques est importante, plus l'émail est pulvérisé finement et crée des taches de faible taille. Bien sûr, beaucoup d'autres paramètres de dépôt peuvent être ajustés, comme la viscosité de l'émail ou de la laque, la température, la vitesse de défilement des substrats, la vitesse de translation des pistolets....

Tous les dépôts sur les plaques sont à base d'émail dans une fritte de verre (ou matrice vitreuse) additionnée de pigments adhoc du type oxydes métalliques colorés, d'un liant optionnel et mise en suspension dans un médium à base d'eau. On se rapportera par exemple à la composition d'émail détaillée dans le brevet EP-0 174 893 précité.

On procède de la manière suivante : les plaques 1 sont mises en mouvement sur un convoyeur non représenté selon un axe de défilement X donné, convoyeur au-dessus duquel on a disposé successivement les trois pistolets 2, 3, 4 qui sont chacun animés d'un mouvement de va-et-vient continu perpendiculaire à l'axe de défilement X des plaques 1.

Le premier pistolet 2 délivre à la surface des plaques 1 un premier nuage de gouttelettes d'émail additionné d'un pigment blanc, qui dépose un premier mouchetis blanc. Les taches ont une forme à peu près ronde, d'un « diamètre moyen » de 1 à 1,5 mm. Elles se répartissent dans une gamme de diamètres allant de 0,1 à 2 mm). On compte environ 50 taches de toutes tailles par cm², chaque tache une fois séchée ayant environ 20 à 50 micromètres d'épaisseur.

Le second pistolet 3 délivre ensuite un autre nuage de gouttelettes d'émail, cette fois additionné d'un pigment noir, d'où un second mouchetis présentant les mêmes caractéristiques, approximativement, que le premier. Comme il n'y a pas eu de séchage des plaques 1 entre les deux pulvérisations, on a, dans les zones où deux taches blanche et noire se sont trouvées partiellement ou totalement superposées, des taches de forme moins arrondie et de couleurs mélangées/fondues/superposées.

Le troisième pistolet 4 délivre enfin un émail additionné d'un pigment gris, qui dépose une couche continue au-dessus des mouchetis, couche une fois séchée d'épaisseur uniforme d'environ 50 à 100 micromètres.

On effectue ensuite un séchage en faisant passer les plaques 1 dans un tunnel à rayonnement infrarouge non représenté, de manière usuelle.

En dernier lieu, on découpe éventuellement les plaques aux dimensions voulues, puis on les trempe, c'est-à-dire qu'on les chauffe quasiment jusqu'au point de ramollissement du verre avant de les refroidir brusquement. Cette trempe permet tout à la fois la vitrification de l'émail et le renforcement mécanique des plaques de verre. Bien sûr, un simple recuit suffirait pour vitrifier l'émail, mais les performances mécaniques du verre sont alors différentes et le refroidissement progressif imposé par un recuit est plus pénalisant en terme de cadence de production.

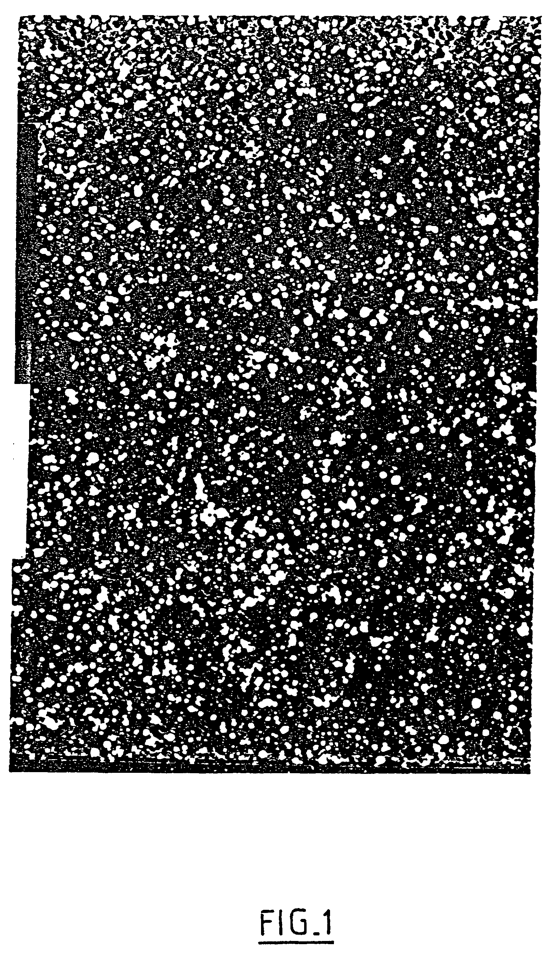

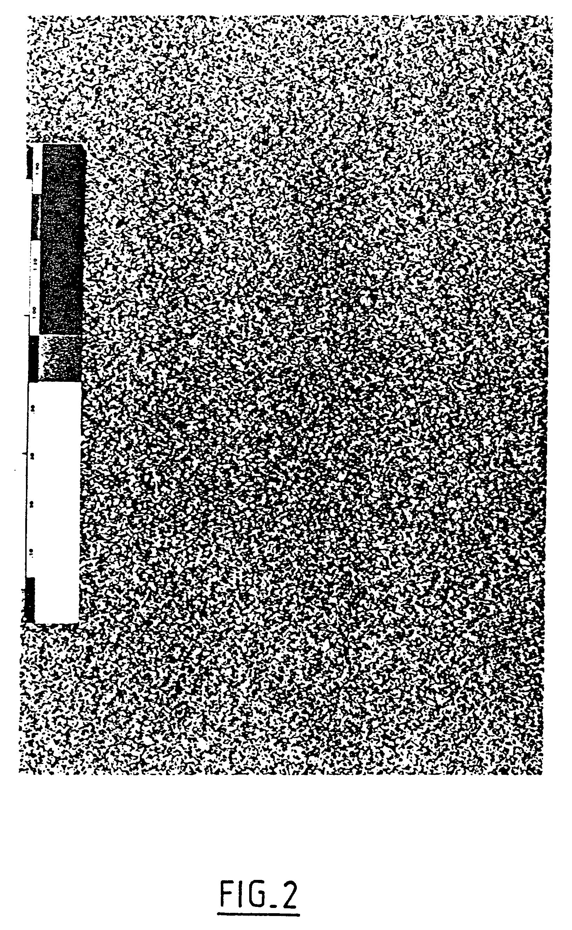

On obtient ainsi des plaques dont on a photographié des portions, photographies que l'on a reproduites à l'échelle 1:1 aux figures 1 et 2 : la couche opacifiante donne la teinte dominante, ici grise, du panneau décoratif. Les taches sont de contours assez nets, les gouttelettes d'émail s'étant fixées sur leur point d'impact sur la plaque, sans « rebondir » ou faire des traînées. On a certains dégradés de couleurs blanc/noir/gris du fait que les dépôts successifs ont été effectués sans séchage intermédiaire. Dans le cas de la figure 1, la taille du mouchetis est plus importante que dans le cas de la figure 2, le contrôle et la sélection des tailles de mouchetis étant obtenus en réglant de manière adéquate les pistolets 2 et 3.

Il va de soi que l'on peut modifier à l'infini les teintes en conservant cet aspect granité, en sélectionnant de manière adéquate les pigments des émaux employés. De même, des séchages intermédiaires peuvent, si on le souhaite, permettre d'obtenir un effet esthétique différent, sans aucun dégradé de couleur. Peut aussi être modifiée la manière dont les taches « tombent » ou sont projetées sur les plaques pour créer des effets de traînées.

L'invention permet ainsi d'obtenir un décor granité se rapprochant beaucoup, par son aspect et ses couleurs, de la pierre véritable. Mais elle permet aussi de créer des décors complètement originaux, par exemple avec des couleurs vives qui ne correspondent pas à celles de la pierre (par exemple, avec une couleur bleue, verte ou orange pour la couche continue opacifiante, et des mouchetis bi-colores blanc/noir, vert/jaune, etc...).

Par ailleurs, au lieu de tremper les plaques, on peut les bomber sans dommage pour les dépôts d'émail, ce qui permet de leur conférer toutes les courbures souhaitées.

En fixant la plaque « côté émail » contre une armature ou un mur, seule la face du substrat nue, non émaillée, est exposée, le décor étant ainsi protégé des aggressions extérieures.

On peut assembler les plaques en vitrages feuilletés si nécessaire, et/ou en juxtaposer un certain nombre pour obtenir une grande surface sans que l'oeil puisse repérer un motif ou une répétition quelconque dans le mouchetis, le feuilletage se faisant côté verre, et non du côté de la face décorée.

Il est clair que toutes ces remarques s'appliquent aussi bien à l'utilisation de laque que d'émail. Dans le cas de la laque, cependant, on a intérêt à déposer la laque après que le substrat verrier ait subi les traitements thermiques du type bombage, trempe, ... Sont notamment utilisables les laques vendues par les sociétés VERODEX, DELTA COATINGS, LIBERT PAINTS ou LEVIS : la société DELTA COATINGS commercialise ainsi une laque de dénomination « colorglass » tri-composant dont le diluant est à base de méthylisobutylcétone et comprenant un premier composant à base de résine polyester hydroxylé, de pigments, de charges, d'additifs sous forme d'agents mouillant, émulsifiant, thixotrope et d'un diluant sous forme d'un mélange de xylène, hydrocarbures aliphatiques et cétones ; un second composant à base de pré-polymère hexaméthylène 1,6 diisocyanate dans un solvant sous forme d'un mélange méthoxypropylacétate/xylène, /xylène, et un troisième composant à base d'un agent mouillant contenant du silicium dans du xylène.

La société LIBERT PAINTS commercialise également sous la dénomination « Mixtane » une laque à base de polyuréthane-acrylique bicomposant, notamment d'un polymère de polyuréthane constitué d'une résine hydroxyacrylique et d'un polyisocyanate aliphatique polyfonctionnel, additionné de pigments organiques ou inorganiques stables à la lumière, le choix du durcisseur permettant d'obtenir un aspect brillant ou au contraire satiné.

Il est à noter, par ailleurs, que si la laque ne contient pas déjà de promoteur d'adhérence, on peut pré-traiter le verre avant dépôt par tout promoteur d'adhérence adhoc, par exemple celui commercialisé sous la référence WI 1001 par la société LIBERT PAINTS à base de combinaisons silanées.

En conclusion, l'invention est simple de mise en oeuvre, en « détournant » en quelque sorte les techniques de projection de peinture, afin de créer des revêtements volontairement discontinus, sous forme de taches. En outre, elle est très souple de mise en oeuvre, car elle permet d'obtenir des panneaux décoratifs mouchetés présentant des aspects très variés, par exemple en termes de couleur, de forme, de densité de mouchetis ou d'effets de superposition de mouchetis.

## Revendications

1. Procédé d'obtention d'un panneau décoratif à l'aspect granité ou tacheté à partir d'un substrat transparent en verre, ***caractérisé en ce qu'on*** projette sur une des faces du substrat par projections successives sur le verre de nuages de gouttelettes d'émail coloré; d'au moins deux couleurs différentes, chaque nuage de gouttelettes étant monochromatique et recouvrant partiellement ladite face en laissant sur celle-ci des taches d'émail réparties de manière aléatoire fonction du point d'impact desdites gouttelettes sur le substrat, **et en ce qu'on** fixe lesdites taches définitivement sur le substrat par vitrification à haute température opérée pendant le traitement thermique du substrat porteur en verre à au moins 600°C, qui est un durcissement, une trempe, un recuit ou un bombage, l'ensemble des dépôts effectués sur le substrat, une fois séchés, ne dépassant pas 500 µm d'épaisseur, chaque projection déposant sur le substrat 20 à 100 g/m² d'émail, sous forme de taches qui, une fois séchées, ont une épaisseur comprise entre 15 et 150 µm, **et en ce qu'après** avoir effectué les projections sur une face du substrat, on recouvre celle-ci d'une couche continue opacifiante d'émail par une projection déposant 250 à 350 g/m² d'émail.

2. Procédé selon la revendication 1, **caractérisé en ce qu'on** sèche l'émail une fois tous les dépôts effectués sur le substrat.

3. Procédé selon la revendication 1, **caractérisé en ce qu'on** sèche au moins partiellement l'émail après au moins un des dépôts effectués sur le substrat par projection.

4. Procédé selon l'une des revendications précédentes, **caractérisé en ce que** le séchage est opéré par traitement par rayonnement infrarouge ou micro-onde et/ou soufflage d'air chaud afin d'évaporer le médium de l'émail ou par traitement par rayonnement ultraviolet afin de polymériser ledit médium.

5. Procédé selon l'une des revendications précédentes, **caractérisé en ce qu'une** fois tous les dépôts effectués sur le substrat, on les fixe définitivement sur le substrat, par une vitrification à haute température pendant ou après séchage de l'émail.

6. Procédé selon l'une des revendications précédentes, **caractérisé en ce que** les projections de nuages de gouttelettes sont effectuées par une technique utilisant des pistolets animés de mouvements de va-et-vient ou utilisant des brosses tournantes.

7. Procédé selon la revendication 6, **caractérisé en ce qu'on** contrôle le taux de recouvrement des taches obtenues sur le substrat en sélectionnant le débit de distribution des dispositifs de projection du type pistolet ou brosse tournante.

8. Procédé selon la revendication 6 ou 7, **caractérisé en ce qu'on** contrôle la taille moyenne des taches obtenues sur le substrat en sélectionnant la pression des gaz d'entraînement et/ou d'accélération des dispositifs de projection du type pistolets ou la vitesse de rotation des dispositifs de projection du type brosses tournantes.

9. Procédé selon l'une des revendications précédentes, **caractérisé en ce que** chaque projection de nuages de gouttelettes dépose sur le substrat des taches qui, une fois séchées, ont une épaisseur comprise entre 15 et 50 micromètres.

10. Procédé selon l'une des revendications précédentes, **caractérisé en ce que** les projections de nuages de gouttelettes déposent sur le substrat des taches de diamètre moyen compris entre 0,1 et 10 mm et de préférence 0,5 à 5 mm, notamment 1 à 2 mm.

11. procédé selon l'une des revendications précédentes, **caractérisé en ce que** l'ensemble des projections du nuages de gouttelettes dépose sur le substrat des taches avec une densité de 5 à 2000 gouttes par cm², de préférence de 10 à 200 gouttes par cm², notamment environ 100 gouttes de toutes tailles, dont 10 à 15 gouttes de taille moyenne par cm².

12. Procédé selon l'une des revendications précédentes, **caractérisé en ce que** chaque projection de nuage de gouttelettes dépose entre 20 et 48 g/m² d'émail.

13. Panneau décoratif obtenu selon le procédé conforme à l'une des revendications précédentes, **caractérisé en ce qu'il** comporte un substrat de verre durci, trempé, recuit ou bombé, recouvert partiellement sur une face de taches d'émail de couleurs différentes, les couleurs étant éventuellement fondues l'une dans l'autre dans les zones de superposition de taches de couleurs différentes, taches elles-mêmes recouvertes par une couche continue opacifiante d'émail d'une couleur encore différente des précédentes.

14. Panneau décoratif selon la revendication 13, **caractérisé en ce que** les taches, séchées, ont une épaisseur comprise entre 15 et 50 micromètres.

15. Panneau décoratif selon la revendication 13 ou la revendication 14, **caractérisé en ce que** les taches ont un diamètre moyen compris entre 0,1 et 10 mm, de préférence entre 0,5 et 5 mm, notamment 1 à 2 mm, et une densité de 10 à 200 gouttes par cm², de préférence environ 100 gouttes de toutes tailles dont 10 à 15 gouttes de taille moyenne par cm².

16. Utilisation du panneau décoratif obtenu conformément au procédé des revendications 1 à 13 ou du panneau décoratif selon l'une des revendications 14 à 16 en tant que revêtement mural, cloison intérieure ou parement de façade, dessus de table, porte ou étagère.

## Claims

1. Process for obtaining a decorative panel having a stippled or mottled appearance from a transparent glass substrate, **characterized in that** at leas two different colours are sprayed onto one of the substrate faces by successive sprayings on the glass of coloured enamel droplet mists, each droplet mist being monochromatic and partly covering said face, whilst leaving thereon enamel specks distributed in a random manner and which is a function of the impact point of said droplets on the substrate and **in that** said specks are definitively fixed on the substrate by high temperature vitrification performed during the heat treatment of the glass carrying substrate at at least 600°C, which is a hardening, tempering, annealing or bending, all of the deposits made on the substrate, once dried, not exceeding a thickness of 500 µm, each spraying depositing on the substrate 20 to 100 g/m² of enamel in the form of specks and which, once dried, have a thickness between 150 and 150 µm and **in that** after effecting spraying on one face of the substrate, the latter is covered with a continuous, opacifying enamel coating by a spraying operation depositing 250 to 350 g/m² of enamel.

2. Process according to claim 1, **characterized in that** the enamel is dried once all the deposits have been made on the substrate.

3. Process according to claim 1, **characterized in that** the enamel is at least partly dried after at least one of the deposits made by spraying on the substrate.

4. Process according to one of the preceding claims, **characterized in that** drying takes place by hot air blowing and/or microwave or infrared radiation treatment in order to evaporate the medium of the enamel or by ultraviolet radiation treatment in order to polymerize said medium.

5. Process according to one of the preceding claims, **characterized in that** once all the deposits have been made on the substrate, they are definitively fixed on said substrate by a high temperature vitrification during or after drying the enamel.

6. Process according to one of the preceding claims, **characterized in that** the droplet mist sprayings take place by a procedure using guns performing a reciprocating movement or using rotary brushes.

7. Process according to claim 6, **characterized in that** the coverage level of the specks obtained on the substrate is controlled by selecting the distribution flow of the spraying devices of the gun or rotary brush type.

8. Process according to claim 6 or 7, **characterized in that** the mean size of the specks obtained on the substrate is controlled by selecting the pressure of the drive and/or acceleration gases of the spraying devices of the gun type or the rotational speed of the spraying devices of the rotary brush type.

9. Process according to one of the preceding claims, **characterized in that** each droplet mist spraying deposits on the substrate specks which, once dried, have a thickness between 15 and 50 micrometers.

10. Process according to one of the preceding claims, **characterized in that** the droplet mist sprayings deposit on the substrate specks having a mean diameter between 0.1 and 10 mm, preferably 0.5 and 5 mm, and in particular 1 to 2 mm.

11. Process according to one of the preceding claims, **characterized in that** all the sprayings of droplet mists deposits on the substrate specks with a density of 5 to 200 droplets per cm², preferably 10 to 200 droplets per cm² and in particular approximately 100 droplets of all sizes, including 10 to 15 droplets of average size per cm².

12. Process according to one of the preceding claims, **characterized in that** each droplet mist spraying deposits between 20 and 48 /m² of enamel.

13. Decorative panel obtained according to the process of one of the preceding claims, **characterized in that** it incorporates a hardened, tempered, annealed or bent glass substrate, partly covered on one face with enamel specks of different colours, the colours optionally merging with one another in superimposed areas of specks of different colours, said specks being themselves covered by a continuous, opacifying, enamel coating with a colour differing from the preceding colours.

14. Decorative panel according to claim 13, **characterized in that** the dried specks have a thickness between 15 and 50 micrometers.

15. Decorative panel according to claim 13 or 14, **characterized in that** the specks have an average diameter between 0.1 and 10 mm, preferably between 0.5 and 5 mm, particularly between 1 and 2 mm and a density of 10 to 200 droplets per cm², preferably approximately 100 droplets of all sizes, including 10 to 15 droplets of average size per cm².

16. Use of the decorative panel obtained according to the process of claims 1 to 13 or the decorative panel according to one of the claims 14 to 16 as a wall covering, internal partition or facade facing block, table, door or shelf top.

## Patentansprüche

1. Verfahren zur Herstellung einer dekorativen Platte mit granitenem oder gesprenkeltem Aussehen aus einem aus Glas bestehenden transparenten Substrat, **dadurch gekennzeichnet, dass** auf eine Seite des Substrats durch aufeinander folgende Arbeitsgänge Nebel aus farbigen Emailtröpfchen in mindestens zwei verschiedenen Farben auf das Glas gesprüht werden, wobei jeder Tröpfchennebel einfarbig ist, die Seite teilweise bedeckt und darauf Emailspritzer hinterläßt, die in Abhängigkeit vom Auftreffpunkt der Tröpfchen auf dem Substrat zufällig verteilt sind, **dass** diese Spritzer durch Glasbildung bei hoher Temperatur, die während der Wärmebehandlung des Glassubstrats bei mindestens 600 °C stattfindet, die ein Verfestigen, Vorspannen, Abkühlen im Kühlofen oder Biegen ist, auf dem Substrat endgültig fixiert werden, wobei die auf dem Substrat durchgeführten Beschichtungen nach deren Trocknung insgesamt eine Dicke von 500 *µ*m nicht übersteigen und durch einen Sprühvorgang auf das Substrat 20 bis 100 g/m² Email in Form von Spritzern aufgebracht werden, die nach der Trocknung eine Dicke von 15 bis 150 *µ*m besitzen, **und dass,** nachdem eine Seite des Substrats beschichtet worden ist, diese mittels eines Beschichtungsvorgangs, durch welchen 250 bis 350 g/m² Email aufgebracht werden, mit einer undurchsichtig machenden ununterbrochenen Emailschicht überzogen wird.

2. Verfahren nach Anspruch 1, **dadurch gekennzeichnet, dass** das Email getrocknet wird, nachdem alle Beschichtungsvorgänge auf dem Substrat durchgeführt worden sind.

3. Verfahren nach Anspruch 1, **dadurch gekennzeichnet, dass** das Email wenigsten teilweise getrocknet wird, nachdem mindestens eine Beschichtung auf das Substrat aufgesprüht worden ist.

4. Verfahren nach einem der vorhergehenden Ansprüche, **dadurch gekennzeichnet, dass** der Trocknungsvorgang durch Infrarotoder Mikrowellenstrahlung und/oder Aufblasen von Heißluft, um das Medium des Emails zu verdampfen, oder durch Ultraviolettstrahlung, um das Medium zu polymerisieren, durchgeführt wird.

5. Verfahren nach einem der vorhergehenden Ansprüche, **dadurch gekennzeichnet, dass,** nachdem auf dem Substrat alle Beschichtungen durchgeführt sind, diese darauf durch eine Glasbildung bei hoher Temperatur während oder nach der Trocknung des Emails endgültig fixiert werden.

6. Verfahren nach einem der vorhergehenden Ansprüche, **dadurch gekennzeichnet, dass** die Tröpfchennebel durch ein Verfahren aufgesprüht werden, in welchem hin- und hergehende Sprühpistolen oder rotierende Bürsten verwendet werden.

7. Verfahren nach Anspruch 6, **dadurch gekennzeichnet, dass** der Bedeckungsgrad mit den Spritzern, die auf das Substrat aufgebracht worden sind, gesteuert wird, indem der Abgabedurchsatz der Sprühvorrichtungen vom Typ Sprühpistole oder rotierende Bürste beeinflußt wird.

8. Verfahren nach Anspruch 6 oder 7, **dadurch gekennzeichnet, dass** die mittlere Größe der auf das Substrat aufgebrachten Spritzer gesteuert wird, indem der Druck des Transportgases und/oder die Beschleunigung der Sprühvorrichtungen vom Typ Sprühpistolen bzw. die Umdrehungsgeschwindigkeit der Sprühvorrichtungen vom Typ rotierende Bürsten beeinflußt wird/werden.

9. Verfahren nach einem der vorhergehenden Ansprüche, **dadurch gekennzeichnet, dass** durch jedes Aufsprühen eines Tröpfchennebels Spritzer, deren Dicke nach der Trocknung 15 bis 50 Mikrometer beträgt, auf das Substrat aufgebracht werden.

10. Verfahren nach einem der vorhergehenden Ansprüche, **dadurch gekennzeichnet, dass** durch Aufsprühen eines Tröpfchennebels Spritzer, deren mittlerer Durchmesser 0,1 bis 10 mm, vorzugsweise 0,5 bis 5 mm und insbesondere 1 bis 2 mm beträgt, auf das Substrat aufgebracht werden.

11. Verfahren nach einem der vorhergehenden Ansprüche, **dadurch gekennzeichnet, dass** durch alle Vorgänge des Aufsprühens eines Tröpfchennebels auf das Substrat Spritzer mit einer Dichte von 5 bis 2 000 Tröpfchen pro cm², vorzugsweise 10 bis 200 Tröpfchen pro cm² und insbesondere etwa 100 Tröpfchen jeder Größe, davon 10 bis 15 Tröpfchen mit mittlerer Größe, pro cm² aufgebracht werden.

12. Verfahren nach einem der vorhergehenden Ansprüche, **dadurch gekennzeichnet, dass** durch das einmalige Aufsprühen eines Tröpfchennebels zwischen 20 und 48 g/m² Email aufgebracht werden.

13. Dekorative Platte, die gemäß dem Verfahren nach einem der vorhergehenden Ansprüche hergestellt worden ist, **dadurch gekennzeichnet, dass** sie ein verfestigtes, vorgespanntes, im Kühlofen abgekühltes oder gebogenes Glassubstrat umfasst, das auf einer Seite teilweise mit Emailspritzern mit unterschiedlicher Farbe beschichtet ist, wobei die Farben in den Bereichen, in denen Spritzer mit unterschiedlicher Färbung übereinander liegen, gegebenenfalls ineinander übergegangen sind und die Spritzer ihrerseits mit einer undurchsichtig machenden ununterbrochenen Emailschicht mit einer Farbe, die wieder von den vorhergehenden verschieden ist, beschichtet sind.

14. Dekorative Platte nach Anspruch 13, **dadurch gekennzeichnet, dass** die Dicke der getrockneten Spritzer 15 bis 50 Mikrometer beträgt.

15. Dekorative Platte nach Anspruch 13 oder 14, **dadurch gekennzeichnet, dass** der mittlere Durchmesser der Spritzer 0,1 bis 10 mm, vorzugsweise zwischen 0,5 und 5 mm und insbesondere 1 bis 2 mm und ihre Dichte 10 bis 200 Tröpfchen pro cm² und vorzugsweise etwa 100 Tröpfchen jeder Größe, davon 10 bis 15 Tröpfchen mit einer mittleren Größe, pro cm² beträgt.

16. Verwendung der dekorativen Platte, die gemäß dem Verfahren der Ansprüche 1 bis 13 hergestellt worden ist, oder der dekorativen Platte nach einem der Ansprüche 14 bis 16 als Wandverkleidung, innerer Abschluß oder Außenverkleidung einer Fassade, Tischbelag, Tür oder Etagere.
